# EUROPÄISCHE PATENTANMELDUNG

(11) **EP 0 678 374 A2**
(43) Veröffentlichungstag der Anmeldung: **25.10.1995**
(21) Anmeldenummer: 95890078.9
(22) Anmeldetag: 07.04.1995
(51) Int. Cl.: B29C 65/20

(54) **Verfahren und Vorrichtung zum Herstellen eines Rahmens, insbesondere Fensterrahmens**

(30) Priorität: 19.04.1994 AT 810/94
(71) Anmelder: Actual Maschinenbau Aktiengesellschaft, A-4053 Haid (AT)
(72) Erfinder: Schwaiger, Meinhard, Dipl.-Ing., A-4020 Linz (AT); Leutgöb, Alois, Dipl.-Ing., A-4407 Steyr (AT); Mutze, Andreas, Dipl.-Ing., D-71093 Weil im Schönbuch (DE)
(74) Vertreter: Hübscher, Heiner, Dipl.-Ing.

(57) **Zusammenfassung**

Zum Herstellen eines Rahmens (R) aus Kunststoffprofilen werden den Rahmenschenkeln angepaßte Profilstücke (P) in eine Schweißmaschine (2) eingelegt und gleichzeitig miteinander verschweißt.

Um den Herstellungsablauf beschleunigen zu können, werden die zugeschnittenen Profilstücke (P) des Rahmens (R) vor dem Einlegen in die Schweißmaschine (2) schweißgerecht zusammengestellt und lagefixiert und dann in dieser gegenseitigen Lagezuordnung gemeinsam der Schweißmaschine (2) übergeben.

## Beschreibung

Die Erfindung bezieht sich auf ein Verfahren zum Herstellen eines Rahmens, insbesondere Fensterrahmens, aus Kunststoffprofilen, nach dem den Rahmenschenkeln angepaßte Profilstücke in eine Schweißmaschine eingelegt und gleichzeitig miteinander durch Anschmelzen und Aneinanderdrücken der Stirnflächen verschweißt werden, sowie auf eine Vorrichtung zum Durchführen des Verfahrens.

Zum Herstellen von Kunststoffrahmen werden bisher die unter Berücksichtigung des erforderlichen Schweißaufmaßes abgelängten und auf Gehrung geschnittenen Profilstücke händisch in die Schweißmaschine eingelegt und ausgerichtet, worauf erst das Einspannen, Anschmelzen und Aneinanderdrücken der Profilstücke zum eigentlichen Verschweißen und gegebenenfalls das anschließende Ausbringen des geschweißten Rahmens maschinell erfolgen. Dieses händische Einlegen der Rahmenschenkel ist allerdings recht umständlich und zeitaufwendig und bringt während des Einlegevorganges beträchtliche Totzeiten für die Schweißmaschine mit sich, was sich vor allem bei einem aufeinanderfolgenden Schweißen unterschiedlicher Rahmendimensionen besonders unangenehm bemerkbar macht. Gemäß der DE-A 3 721 861 wurde zwar auch schon vorgeschlagen, die entsprechend zugeschnittenen Kunststoffprofilstücke jeweils für einen Rahmen in einem Zwischenspeicher abzulegen und sie von dort über einen Greifer in die Schweißmaschine einlegen zu lassen, doch müssen wiederum die Profilstücke einzeln und hintereinander dem Zwischenspeicher entnommen und in die Schweißmaschine eingelegt werden, so daß es auch bei diesem maschinellen Einlegevorgang zu langen Schweißmaschinentotzeiten kommt.

Der Erfindung liegt daher die Aufgabe zugrunde, diese Mängel zu beseitigen und ein Verfahren der eingangs geschilderten Art anzugeben, das ein rationelles Herstellen von Kunststoffprofilrahmen erlaubt und ein wesentliches Absenken der auftretenden Totzeiten einer Schweißmaschine auch beim Schweißen unterschiedlich dimensionierter Rahmen gewährleistet. Außerdem soll eine zur einfachen Durchführung dieses Verfahrens geeignete Vorrichtung geschaffen werden.

Die Erfindung löst diese Aufgabe dadurch, daß die zugeschnittenen Profilstücke des Rahmens vor dem Einlegen in die Schweißmaschine schweißgerecht zusammengestellt und lagefixiert und dann in dieser gegenseitigen Lagezuordnung gemeinsam der Schweißmaschine übergeben werden. Durch diesen Vorbereitungsschritt können die zu einem Rahmen zusammenzuschweißenden Profilstücke unabhängig von der Schweißmaschine entsprechend zusammengestellt und rahmengemäß aufeinander ausgerichtet werden, so daß sich dann für den eigentlichen Schweißvorgang alle den Rahmen bildenden Profilstücke gemeinsam und bereits ausgerichtet in einem einzigen Einlegeschritt der Schweißmaschine übergeben lassen. Der Einlegevorgang dauert daher nur einen Bruchteil des bisherigen Einzeleinlegens der Profilstücke und hilft, den gesamten Herstellungsvorgang zu rationalisieren. Da das Zusammenstellen und Ausrichten der Profilstücke außerhalb der Schweißmaschine erfolgen, ist es möglich, diesen Vorbereitungsschritt parallel zu einem Schweißbetrieb der Schweißmaschine vorzunehmen, so daß während des Schweißens des einen Rahmens bereits die Profilstücke zum Herstellen des nächsten Rahmens vorbereitet werden können und nach Beendigung des Schweißvorganges bereits wieder ein schweißgerecht zusammengestellter Satz von Profilstücken zum Beschicken der Schweißmaschine zur Verfügung steht. Es spielt hier keine Rolle, ob gleiche oder unterschiedliche Rahmendimensionen zu schweißen sind, da ja im Vorbereitungsschritt die den jeweiligen Rahmengrößen entsprechenden Profilstücke vorbereitet werden und die Schweißmaschine gegebenenfalls dann nach dem Schweißen des einen Rahmens nur vor dem Einlegen des nächsten Profilstücksatzes auf die geänderte Rahmendimension bzw. das neue Schweißmaß positioniert zu werden braucht, bevor der bereits vorbereitete Profilstücksatz eingelegt wird. Zweckmäßigerweise wird dabei das Ausbringen der fertiggeschweißten Rahmen seitlich oder entgegengerichtet zur Einlegerichtung der Profilstücke durchgeführt, so daß auch hier ein überschneidendes Arbeiten möglich ist und während des Ausbringens eines fertigen Rahmens die Schweißmaschine bereits wieder für einen neuen Schweißschritt einsetzbereit gemacht werden kann. Da das eigentliche Zusammenstellen und Ausrichten der Profilstücke im Vorbereitungsschritt nicht direkt in den Schweißablauf eingreift, ist es auch unerheblich, ob die einzelnen Profilstücke im Vorbereitungsschritt händisch oder maschinell über einen Roboter od. dgl. eingelegt und ausgerichtet werden oder wie die einzelnen Profilstücke zugeliefert und vorbehandelt werden oder auch welche Form und Ausstattung die Rahmen bekommen.

Eine weitere Rationalisierung des Herstellungsverfahrens wird erreicht, wenn die Profilstücke vor oder während der Übergabe an die Schweißmaschine stirnseitig angeschmolzen werden, da sich so eine Aufteilung des Schweißvorganges ergibt und in der Schweißmaschine selbst nur mehr die schon angeschmolzenen Profilstücke ordnungsgemäß aneinandergedrückt zu werden brauchen, was die Kapazität der Schweißmaschine entsprechend erhöht.

Zum Schweißen von Rahmen aus Kunststoffprofilen gibt es bereits Mehrkopfschweißmaschinen, deren in einer Aufspannebene relativ zueinander verfahrbar geführte Schweißköpfe jeweils zueinander relativverschiebbare Aufspanneinheiten für die Profilstücke aufweisen, so daß ein gleichzeitiges Schweißen von mehreren, meist vier Profilstücken zu einem Rahmen möglich ist. Um nun bei solchen Mehrkopfschweißmaschinen das erfindungsgemäße Verfahren einfach durchführen zu können, ist eine Einlegeeinrichtung vorgesehen, die den Schweißköpfen entsprechend viele, in einer Einlegeebene relativ zueinander verfahrbar geführte Aufnahmeköpfe mit Aufnahmewerkzeugen zur Halterung der Profilstücke umfaßt, welche Aufnahmeköpfe mit ihren Aufnahmewerkzeugen gemeinsam aus der Einlegeebene in die Aufspannebene bewegbar sind. Die zu verschweißenden Profilstücke können daher in die Aufnahmeköpfe ähnlich wie in die Schweißköpfe eingelegt und ausgerichtet werden, wo sie über die Aufnahmewerkzeuge gehalten und lagefixiert sind. Die so vorbereiteten und gehaltenen Profilstücke werden dann über die Einlegeeinrichtung in die auf das entsprechende Schweißmaß positionierte Schweißmaschine eingelegt, wobei die Aufspanneinheiten der Schweißköpfe die lagerichtig eingesetzten Profilstücke von den Aufnahmeköpfen der Einlegeeinrichtungen übernehmen. Die Beschickung der Schweißmaschine erfordert daher nur mehr den Zeitanteil für die reine Übergabebewegung der Einlegeeinrichtung, die Spannbewegung der Schweißköpfe und danach die Freifahrbewegung der Aufnahmeköpfe der Einlegeeinrichtung, und zwar unabhängig von der Größe des jeweils zu schweißenden Rahmens. Die Einlegeeinrichtung fährt wieder in ihre Einlegeposition, wo die neuen Profilstücke in die Aufnahmeköpfe eingelegt werden, während gleichzeitig die Schweißmaschine die übernommenen Profilstücke stirnseitig anschmilzt und aneinanderdrückt.

Grundsätzlich spielt es keine Rolle, in welcher Relativlage zur Schweißmaschine sich die Einlegeposition der Einlegeeinrichtung befindet, die Einlegeeinrichtung muß lediglich die erforderliche Stellbewegung zwischen der Einlegeposition und der Übergabeposition in der Schweißmaschine durchführen können, doch ist es besonders zweckmäßig, wenn die Einlegeeinrichtung ein über der Schweißmaschine angeordnetes Hubgestell zur Führung der Aufnahmeköpfe aufweist, das mit seinen Führungsschienen bzw. -schlitten eine zur Aufspannebene parallele Einlegeebene bestimmt und quer zur Einlegeebene hubverstellbar abgestützt ist. Dadurch wird die Stellbewegung zu einer einfachen Hebebewegung des Hubgestelles und außerdem bleibt seitlich oder unterhalb der Schweißmaschine ausreichend Platz zur Anordnung einer geeigneten Ausbringeinrichtung.

Bestehen die Aufnahmewerkzeuge der Aufnahmeköpfe aus normal zur Einlegeebene ausgerichteten Anschlagplatten für die Profilstückstirnseiten und außen an den Profilstücklängsseiten angreifenden Haltearmen, kommt es zu einer einfachen und für die verschiedensten Rahmendimensionen geeigneten Werkzeugkonstruktion, wobei die Profilstücke lediglich zum Ausrichten an die Anschlagplatten angelegt zu werden brauchen und dann durch ein gegenseitiges Zusammenfahren der Aufnahmeköpfe zwischen den Haltearmen fixiert werden. Da die Unterseite werkzeugfrei bleibt, gibt es auch keine Schwierigkeiten bei der Übergabe der Profilstücke an die Schweißmaschine und die Profilstücke lassen sich von oben auf die geöffneten Aufspanneinheiten der Schweißmaschine aufsetzen.

Sind die Aufnahmeköpfe mit zurückziehbaren, in der Einlegeebene liegenden Auflagerplatten versehen, wird das Einlegen der Profilstücke in die Einlegeeinrichtung erleichtert, da sich die Profilstücke auf die Auflagerplatten auflegen lassen und das Zusammenfahren der Aufnahmeköpfe dann ein automatisches Ausrichten gegenüber den Anschlagplatten mit sich bringt. Durch das Zurückziehen der Auflagerplatten nach dem Festspannen der Profilstücke wird die Unterseite zum Übergeben an die Schweißmaschine wieder freigegeben.

Um während der Übergabe der in die Einlegeeinrichtung eingelegten Profilstücke den Schweißvorgang beginnen zu können, sind die Anschlagplatten als Heizspiegel ausgebildet, so daß sich der Schweißmaschine bereits angeschmolzene Profilstücke übergeben lassen und eine weitere Rationalisierung des Herstellungsvorganges möglich ist.

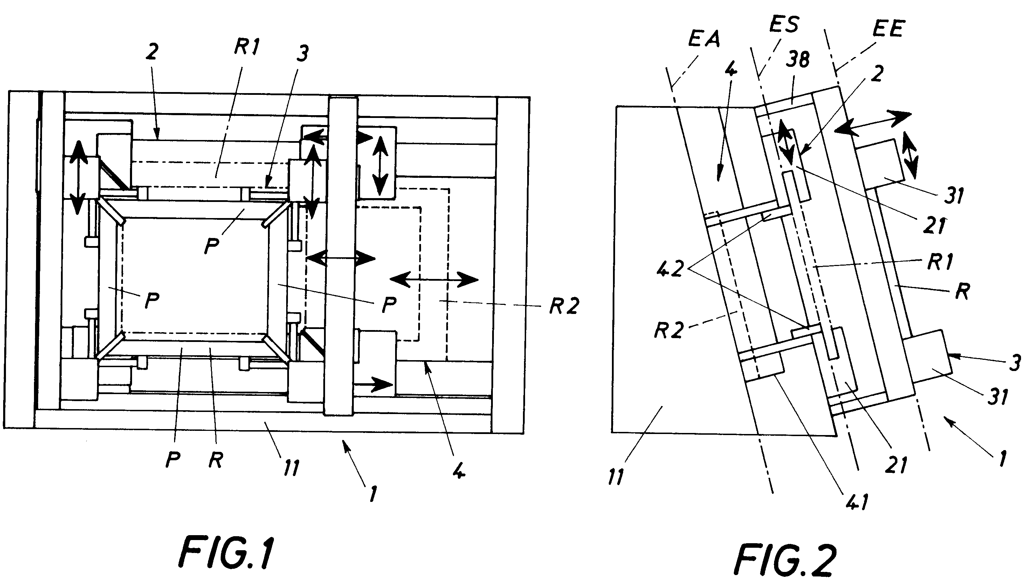

In der Zeichnung ist der Erfindungsgegenstand rein schematisch veranschaulicht, und zwar zeigen
- Fig. 1 und 2: eine erfindungsgemäße Vorrichtung zum Herstellen eines Kunststoffprofil-Rahmens in Vordersicht bzw. in Seitensicht,
- Fig. 3: die Einlegeeinrichtung dieser Vorrichtung in Draufsicht sowie die
- Fig. 4 und 5: einen Aufnahmekopf der Einlegeeinrichtung in Draufsicht bzw. Seitensicht,
- Fig. 6: die Schweißmaschine der erfindungsgemäßen Vorrichtung in Draufsicht und
- Fig. 7: das Zusammenspiel von Einlegeeinrichtung und Schweißmaschine im Bereich eines Aufnahme- bzw. Schweißkopfes in Draufsicht.

Um Rahmen R durch Verschweißen von den Rahmenschenkeln angepaßten Profilstücken P herzustellen, gibt es eine Vorrichtung 1, die sich aus einer Vierkopfschweißmaschine 2 zum Verschweißen der Profilstücke P, einer Einlegeeinrichtung 3 zum Einlegen der Profilstücke P in die Schweißmaschine 2 und einer Ausbringeinrichtung 4 zum Ausbringen des geschweißten Rahmens R aus der Schweißmaschine 2 zusammensetzt, wobei Ausbringeinrichtung, Schweißmaschine und Einlegeeinrichtung übereinander auf einem Grunstgestell 11 aufgebaut sind und drei Arbeitsebenen, die Ausbringebene EA, die Aufspannebene ES und die Einlegeebene EE bestimmen.

Die Schweißmaschine 2 weist vier Schweißköpfe 21 mit jeweils relativ zueinander verschiebbaren Aufspanneinheiten 22 für die Profilstücke P und in der Schweißebene heb- und senkbare Schweißspiegel 23 auf, womit die Profilstücke P eingespannt, durch die hochgefahrenen Schweißspiegel 23 stirnseitig angeschmolzen und dann nach Zurückziehen der Schweißspiegel durch ein Aneinanderdrücken der Stirnseiten miteinander verschweißt werden können. Die Schweißköpfe 21 sind in der Aufspannebene ES relativ zueinander verfahrbar geführt, wozu geeignete Längsund Querschienen bzw. -schlitten 24, 25 vorgesehen sind. Durch entsprechendes Verfahren der Schweißköpfe 21 läßt sich damit die Schweißmaschine 2 auf verschiedene Schweißmaße positionieren, um unterschiedlich dimensionierte Rahmen R herstellen zu können.

Die Einlegeeinrichtung 3 weist vier in der Einlegeebene EE relativ zueinander verfahrbar geführte Aufnahmeköpfe 31 mit Aufnahmewerkzeugen 32 zur Halterung der Profilstücke P auf, wobei die Aufnahmewerkzeuge 32 jeweils aus einer normal zur Einlegeebene ausgerichteten, in der Schweißebene liegende Anschlagplatte 33 für die Profilstückstirnseiten und zwei bügelförmig abwärts vorkragenden, außen an den Profilstücklängsseiten angreifenden Haltearmen 34 sowie einer in der Einlegeebene EE liegenden, in eine Wartestellung zurückziehbaren Auflagerplatte 35 bestehen. Zum Verfahren der Aufnahmeköpfe 31 sind zu den Längs- und Querschienen bzw. -schlitten 24, 25 der Schweißmaschine parallel verlaufende Führungsschienen bzw. -schlitten 36, 37 vorgesehen, die auf einem normal zur Aufspann- bzw. Einlegeebene ES, EE hubverstellbar abgestützten Hubgestell 38 angeordnet sind.

Die Ausbringeinrichtung 4 umfaßt einen in der Ausbringebene EA hinter der Schweißmaschine 2 seitlich wegführenden Längsförderer 41 und eine zwischen Aufspann- und Ausbringebene ES, EA eingesetzten Übergabeeinrichtung 42, wodurch die fertiggeschweißten Rahmen R aus der Schweißmaschine 2 nach dem Öffnen der Aufspanneinheiten nach hinten zur Ausbringeinrichtung 4 abgesenkt und dann seitlich ausgefahren werden können.

Nicht weiter dargestellte Steuerungseinrichtungen erlauben es, die Funktionen von Schweißmaschine, Einlegeeinrichtung und Ausbringeinrichtung aufeinander abzustimmen und einen rationellen Herstellungsablauf zu gewährleisten:

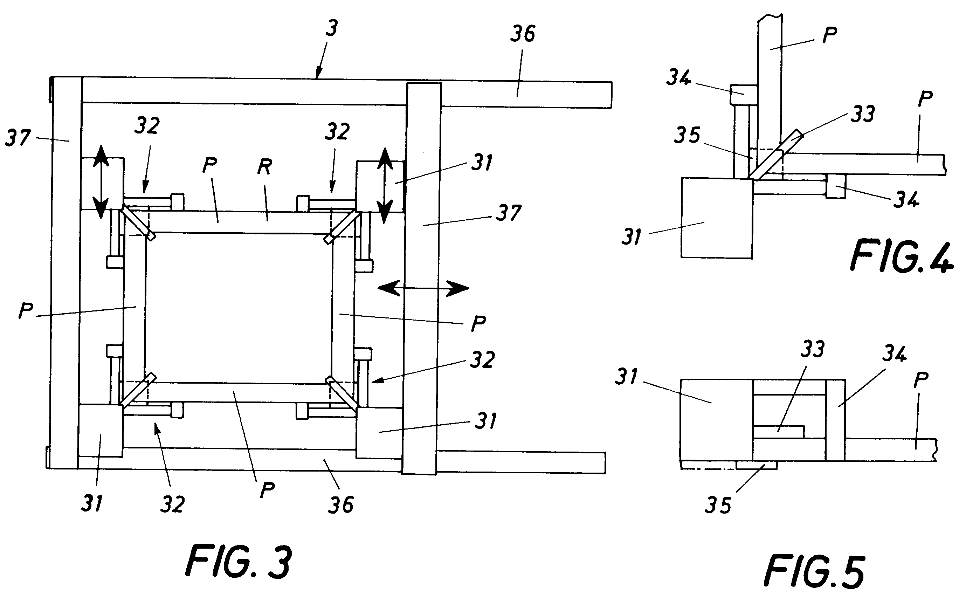

Die zum Herstellen eines Rahmens R erforderlichen Profilstücke P werden in die Einlegeeinrichtung 3 eingelegt, deren Aufnahmeköpfe 31 in Abhängigkeit von der jeweiligen Rahmendimension in die entsprechende Einlegeposition verfahren sind. Die Profilstücke P werden dabei händisch oder mittels eines Roboters od. dgl. in die Aufnahmewerkzeuge 32 eingesetzt, wobei sie auf den vorgeschobenen Auflagerplatten 35 aufliegen und mit ihren auf Gehrung geschnittenen Stirnseiten an den Anschlagplatten 33 anschlagen. Nach dem Einlegen aller vier Profilstücke werden die Aufnahmeköpfe 31, die zum Einlegen etwas geöffnet sind, zusammengefahren, so daß die Profilstücke unter gleichzeitiger Ausrichtung zwischen den Haltearmen 34 einerseits und den Anschlagplatten 33 lagesicher festgespannt sind. Nun werden die Auflagerplatten 35 zurückgezogen (strichlierte Darstellung in Fig. 5), so daß die Unterseiten der Profilstücke freigegeben sind.

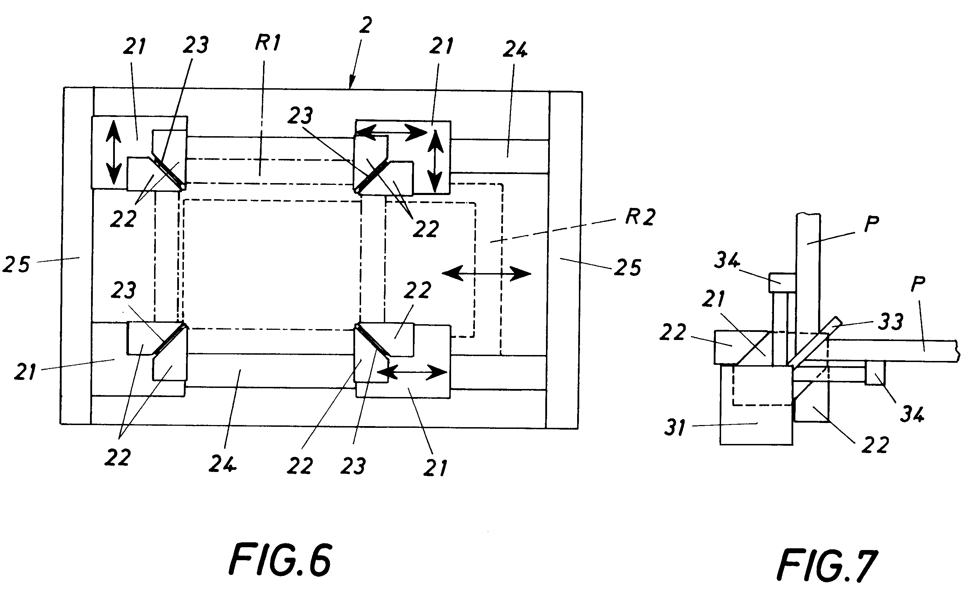

Während des Einlegens der Profilstücke P in die Einlegeeinrichtung 3 wurde in der Schweißmaschine 2 aus den im vorausgegangenen Vorbereitungsschritt eingelegten Profilstücken ein Rahmen R1 geschweißt und mit der Ausbringeinrichtung 4 ein bereits fertiggeschweißter Rahmen R2 ausgetragen, so daß sich ein überlappendes Arbeiten ergibt. Sobald der Rahmen R1 fertiggeschweißt ist, wird er an die Ausbringeinrichtung 4 übergeben und während des Ausbringens dieses Rahmens fahren die Schweißköpfe 21 auf das neue Schweißmaß, wo sie mit geöffneten Aufspanneinheiten 22 sofort zur Übernahme der Profilstücke P aus der Einlegeeinrichtung bereit sind. Das Hubgestell 38 der Einlegeeinrichtung 3 wird abgesenkt und die Aufnahmeköpfe 31 mit ihren Aufnahmewerkzeugen 32 und den festgehaltenen Profilstücken P setzen von oben auf die Schweißköpfe 21 auf (Fig. 7). Die Profilstücke P werden in schweißgerechter Relativlage an die Aufspanneinheiten 22 übergeben, wobei einerseits die zurückgezogenen Auflagerplatten 35, anderseits die von oben abwärts frei vorkragenden Haltearme 34 ein ordnungsgemäßes Zusammenwirken von Aufspanneinheiten und Aufnahmewerkzeugen ermöglichen. Nun spannen die Aufnahmeeinheiten die Profilstücke, worauf die Aufnahmeköpfe 31 etwas auseinanderfahren und damit die Profilstücke freigeben, und die Einlegeeinrichtung kann zurück in die Einlegeposition für den nächsten Einlegevorgang gebracht werden.

Gleichzeitig mit dem neuen Einlegevorgang erfolgt in üblicher Weise der Schweißvorgang und nach dem Fertigschweißen übernimmt die Ausbringeinrichtung 4 mit ihrer Übermahmeeinrichtung 42 den durch Öffnen der Aufspanneinheiten und entsprechendes Auseinanderfahren der Schweißköpfe freigegebenen fertigen Rahmen, senkt ihn auf den Längsförderer 41 ab, und der Rahmen wird seitlich ausgebracht. Inzwischen wurde die Schweißmaschine wieder auf das neue Schweißmaß positioniert und die parallel dazu frisch bestückte Einlegeeinrichtung 3 kann die bereits wieder vorbereiteten Profilstücke in die Schweißmaschine einlegen, so daß ein rationeller, sich hinsichtlich der Einlege-, Schweiß- und Ausbringschritte überschneidender Herstellungsablauf gewährleistet ist.

## Patentansprüche

1. Verfahren zum Herstellen eines Rahmens (R), insbesondere Fensterrahmens, aus Kunststoffprofilen, nach dem den Rahmenschenkeln angepaßte Profilstücke (P) in eine Schweißmaschine (2) eingelegt und gleichzeitig miteinander durch Anschmelzen und Aneinanderdrücken der Stirnflächen verschweißt werden, dadurch gekennzeichnet, daß die zugeschnittenen Profilstücke des Rahmens vor dem Einlegen in die Schweißmaschine schweißgerecht zusammengestellt und lagefixiert und dann in dieser gegenseitigen Lagezuordnung gemeinsam der Schweißmaschine übergeben werden.

2. Verfahren nach Anspruch 1, dadurch gekennzeichnet, daß die Profilstücke vor oder während der Übergabe an die Schweißmaschine stirnseitig angeschmolzen werden.

3. Vorrichtung zum Durchführen des Verfahrens nach Anspruch 1 oder 2, mit einer Mehrkopfschweißmaschine (2), deren in einer Aufspannebene (ES) relativ zueinander verfahrbar geführte Schweißköpfe (21) jeweils zueinander relativverschiebbare Aufspanneinheiten für die Profilstücke (P) aufweisen, sowie mit einer Einlegeeinrichtung (3) zum Einlegen der Profilstücke (P) in die Schweißmaschine (2) und vorzugsweise einer Ausbringeinrichtung (4) zum Ausbringen des geschweißten Rahmens (R) aus der Schweißmaschine (2), dadurch gekennzeichnet, daß die Einlegeeinrichtung (3) den Schweißköpfen (21) entsprechend viele, in einer Einlegeebene (EE) relativ zueinander verfahrbar geführte Aufnahmeköpfe (31) mit Aufnahmewerkzeugen (32) zur Halterung der Profilstücke (P) umfaßt, welche Aufnahmeköpfe (31) mit ihren Aufnahmewerkzeugen (32) gemeinsam aus der Einlegeebene (EE) in die Aufspannebene (ES) bewegbar sind.

4. Vorrichtung nach Anspruch 3, dadurch gekennzeichnet, daß die Einlegeeinrichtung (3) ein über der Schweißmaschine (2) angeordnetes Hubgestell (38) zur Führung der Aufnahmeköpfe (31) aufweist, das mit seinen Führungsschienen bzw. -schlitten (36, 37) eine zur Aufspannebene (ES) parallele Einlegeebene (EE) bestimmt und quer zur Einlegeebene (EE) hubverstellbar abgestützt ist.

5. Vorrichtung nach Anspruch 3 oder 4, dadurch gekennzeichnet, daß die Aufnahmewerkzeuge (32) der Aufnahmeköpfe (31) aus normal zur Einlegeebene (EE) ausgerichteten Anschlagplatten (33) für die Profilstückstirnseiten und außen an den Profilstücklängsseiten angreifenden Haltearmen (34) bestehen.

6. Vorrichtung nach Anspruch 5, dadurch gekennzeichnet, daß die Aufnahmeköpfe (31) mit zurückziehbaren, in der Einlegeebene (EE) liegenden Auflagerplatten (35) versehen sind.

7. Vorrichtung nach Anspruch 5, dadurch gekennzeichnet, daß die Anschlagplatten (33) als Heizspiegel ausgebildet sind.
